# EUROPEAN PATENT SPECIFICATION

(11) **EP 2 045 502 B1**
(45) Date of publication and mention of the grant of the patent: **18.01.2012**
(21) Application number: 07425614.0
(22) Date of filing: 02.10.2007
(51) Int. Cl.: F16L 33/22

(54) **Fitting for polymeric or multilayer pipes (armoured)**
Anschlussstück für polymere oder mehrschichtige Rohre (gepanzert)
Fixation pour tuyaux polymériques ou multicouches (blindés)

(43) Date of publication of application: 08.04.2009
(73) Proprietor: Greiner S.p.A., 25065 Lumezzane S. Sebastiano BS (IT)
(72) Inventor: Lena, Roberto, 25065 Lumezzane (BS) (IT); Astori, Giorgio, 25068 Sarezzo (BS) (IT)
(74) Representative: Marietti, Andrea

(56) References cited:
- DE-B- 1 252 984
- FR-A- 1 446 056
- FR-A- 2 246 802
- US-A- 2 833 567

## Description

The present invention concerns a pipe fitting in polymeric material, particularly it concerns a fitting for connecting pipes mentioned as multilayer, or armoured pipes, to other pipes or to external implants.

Pipes designed for civil and/or industrial hydraulics are far back available on market, e.g. these designed for sanitary field, for heating, otherwise designed for gas supply, being realized with more or less deformable polymeric materials such as, for example, polyethylene. Pipes composed of polymeric materials are generally commercialized with variable diameters from 20 mm to 1600 mm, even if pipes having higher or lower diameters than the suggested range are available for specific applications.

By way of example, a typical polymeric pipe is produced and commercialized by the EGEPLAST Company with the trade name of EGELEN, and it is composed of high density polyethylene PE 100, or PE 80.

Recently, due to higher mechanical resistance and reduced permeability to liquids compared to traditional polymeric pipes, the "multilayer" pipes, that is pipes composed of alternate metallic and polymeric layers, found large use. A typical multilayer pipe is composed of, for instance, two plastic layers, an inner and an outer one, between which there is an aluminum layer produced by the EGEPLAST Company (known as armoured multilayered). By way of example too, another multilayer pipe available on market is produced by the PALBOX INDUSTRIALE S.p.A Company, with the trade name of TUBOX-AL, and it is composed of a middle polyethylene layer, covered by a double aluminum band and protected by an outer polyolefinic layer.

Traditionally, polymeric pipes are functionally connected one to each other, or to external implants, by metallic fittings usually made of brass, ADZ brass (antidezincification), brass or bronze alloy, etc. Usually pipe connection, particularly the polyethylene ones, is carried out with fittings known in the art as press-fittings, threaded clamping fittings, otherwise compression fittings or "bicone" fittings (also providing for soldering).

Broadly speaking, traditional fittings are configured to engage the outer surface of the corresponding pipe and to seam it radially from outside, in cooperation with a bush introduced within the pipe, from an end thereof. For example, a fitting of this type is described in the International Application WO 2005/012780.

Particularly, pipe connection for fluid delivery under pressure is generally carried out using a fitting comprising a bush provided with an externally threaded or barbed portion, intended to be introduced within a pipe ending, and a locking ring intended to be externally tightened or screwed in, around the pipe, to press the corresponding inner walls against the bush barbed adaptors.

International Application WO 2005/059424 describes a multilayer pipe fitting comprising a hollow and rigid sleeve, having a portion provided with barbed adaptors introducible in a pipe ending, an externally threaded connecting terminal member, externally fittable over the sleeve, a clamping ring having an internally threaded portion and screwable on the connecting terminal member, and an elastic gasket interposed between the clamping ring and the terminal member for electric current insulating. The fitting lock on pipe is obtained by screwing the clamping ring on the terminal member when the latter is fitted over the sleeve. When the ring is screwed on the terminal member, the pipe inner wall is pressed against the sleeve barbed adaptors, i.e. it is seamed to the sleeve.

When the delivered fluid pressure is high, the fittings are generally provided with metallic clamping rings, at least partially plastically deformable in radial direction during installation. The ring radial squashout and therefore the radial deformation of the corresponding polymeric or multilayer pipe for the seaming to an inner fitting tool chuck is manually carried out by the operator assigned to the pipe installation by an appropriate tool. In the International Application WO 03/012328 is described a fitting provided with a plastically deformable ring, or bush.

FR 1 446 056 discloses a fitting of the detachable and reusable type for multilayer pipes having an inferior layer made of polymeric material surrounded by reinforcing wire layer. The fitting comprises a body member having an internal threaded portion to engages a corresponding threaded portion of a tubular nipple, which is inserted into the pipe. A socket having a internal threaded portion engages the thread on the external surface of the body member to block the pipe on the fitting. The opposite end of the body member is provided with a nut fixed on it by means of a stacking wire.

US 2 833 567 relates to a reusable and detachable fitting for reinforced pipe having an inner tube and a reinforcing layer made of braided wire. The fitting comprises a body for threaded engagement with a socket in order to block the pipe, and a sleeve, which is interposed between the inner tube and the external reinforcing layer of the pipe. A nut is attached at the rear portion of the body by a suitable connector.

DE 12 52 984 discloses a fitting for an armoured pipes made of a rubber internal tube, a reinforcing layer of braided wire and an external rubber layer. The fitting has a main body provided with a cylindrical spout on which one end of the pipe is blocked by means of two deformable intermediate sleeve pressed on the body of the fitting by a conical member. The opposite portion of the body member of the fitting is provided with a nut fixed on it by a compression spring.

Traditional fitting for pipes comprising polymeric or multilayer material exhibits numerous drawbacks.

First of all, the mechanical clamping fittings now available don't guarantee the sealing of the fitting to the corresponding pipe, particularly in case of armoured multilayer pipes, most of all for the so-called pressure surges, that generate pressures higher than the nominal one of the hydraulic loop of bar tens too. In other words, when the fluid pressure circulating in the pipe is rising, the risks of the bush taking off from the pipe ending markedly rise too, causing de facto the fitting release and the leak of fluid from the implant the pipe belongs to. The pressure exercised on pipe by the outer ring, deformed or screwed on, may in fact be insufficient for assuring the sealing of the seaming to the inner bush of the fitting, when the liquid or gas pressure in the pipe is higher, for example, than the nominal pipe working pressure.

Secondly, the press-fittings, on the other hand providing a higher sealing than the mechanical clamping ones, are complicated to arrange on the corresponding multilayer pipe, and they always need some ability and experience by the operator. In particular, the fittings provided with deformable ring necessarily need the use of a specific tool (one little hydraulic press or even two, depending on pipe measures) for radially deforming the ring during installation of the fitting itself, with evident drawbacks concerning durations and costs for pipe installation.

Object of the present invention is to provide a pipe fitting, in particular for multilayer or armoured pipes, that solves simply and effectively the drawbacks of the traditional solutions, at the time being simple to realize and to arrange on such a pipe.

It is furthermore an object of the present invention to provide a pipe fitting, specially a multilayer pipe, which arrangement on the corresponding pipe can be non-reversible, i.e. a fitting that, after being disposed over a pipe, subsequently cannot be separated therefrom.

These and other objects are obtained by the present invention, concerning a pipe fitting, particularly multilayer or armoured pipes, characterized according to claim 1.

The fitting comprises a main body, for example a bush, having a first externally threaded or barbed portion (namely externally provided with parallel threadings), at least partially introducible in a pipe ending of the corresponding pipe, and a second abutting portion, intended to protrude outwardly from the pipe ending itself. The first barbed portion allows for the seaming of the inner pipe wall when the fitting is operative. In other words, during the fitting assembly on pipe, the latter is pressed against the threaded or barbed portion of the main body or bush, that is situated inside thereof, causing partially penetration of the barbed adaptors or threadings in the pipe inner wall. This is possible due to the threaded element presence, for example a nut, the screwing of which on a circular section component, for example a internally barbed pipe clamping ring (that is having parallel throats), is generating a force that is sufficient to create a radial deformation of the pipe, thereby allowing the inner wall of the pipe itself to seam the main body barbed adaptors.

Furthermore the fitting comprises a terminal member fittable on the second abutting portion of the main body (or bush), that is outside the pipe, for connecting to other pipes or loops.

Advantageously, the fitting comprises at least an elastic element, situated between the second abutting portion and the connecting terminal member, for permanent snap fit of the connecting terminal member to the main body of the fitting.

As it will be recognized from the specification below, the fitting according to the present invention allows for a great reduction of installation times and it allows to maximize the coupling sealing compared to traditionally used fittings for connecting pipes, particularly multilayer pipes.

The main body and the connecting terminal member are essentially cylindrical, that is to say they have cross sections substantially cylindrical, and they are preferably fabricated in "antidezincification" brass, commonly called ADZ. Alternatively, they might be composed of other materials, for example stainless steel or brass or other metal alloys otherwise plastics having appropriate mechanical characteristics.

According to the preferred embodiment of the present invention, the elastic element is a circlip called "seeger". Such a ring is realized in metallic material and it is deformable in radial direction. It is substantially an open ring (namely not closed) because of an "omitted" length. By applying force to the seeger circlip, this might be modified from an initial rest configuration to a first deformed configuration having a reduced diameter. When the deformation force fails, the ring will return back in the initial configuration (elastic deformation), corresponding to the initial diameter.

Preferably, the fitting is provided with a not perfectly circular "seeger" circlip (almost circular), but slightly oval- or "horseshoe"- or elliptic-shaped. This shape accommodates introducing in the corresponding housing. Therefore with "diameter" term, it is intended the medium diameter or the "equivalent" diameter of the oval-shaped ring.

The seeger circlip is at least partially accommodated in an annular housing obtained on the outer surface of the second main body abutting portion (not being circular, some ring portions will protrude from housing). The annular housing has an outer diameter corresponding to the "seeger" circlip diameter in its deformed configuration, that is the annular housing has such a dimension to completely accommodate the radially deformed seeger circlip in its minimum diameter. When the fitting is operative, that is when the assembly is completed, the seeger circlip engages at least partially an annular recess obtained over the inner surface of the connecting terminal member.

In other words, when the fitting according the present invention is operative on a pipe, the seeger circlip engages simultaneously the corresponding housings over the main body and connecting terminal member. A seeger circlip portion engages an annular recess over the inner surface of the connecting terminal member and another portion of the ring itself engages an annular recess obtained over the outer surface of the main body abutting portion, or bush. With this configuration it is not possible to release the connecting terminal member from the main body of the fitting. In practice, the seeger circlip realizes an irreversible snap fit between the connecting terminal member and the fitting body. Furthermore, thanks to the particular conformation of the housing obtained in the main body or bush, the resistance from releasing the "seeger" circlip grows up at the same time the fluid pressure in the pipe grows.

Alternatively to the described solution, the circlip could be a closed ring, realized in a deformable material that is radially deformable, for example an acetalic resin.

While assembling the fitting on the relating pipe, the seeger circlip is elastically deformed in the radial direction to allow the sliding of the connecting terminal member over the outer surface of the main body abutting portion. When the connecting terminal member annular recess is aligned with the annular recess of the fitting main body, the seeger circlip is subjected to a spring back, returning to the initial configuration, or otherwise in a configuration having greater diameter than the minimum diameter. In other words, as the connecting terminal member is correctly situated on the abutting portion of the fitting main body, the seeger circlip will "snap" in the corresponding housing of the connecting terminal member, blocking further movements in the axial direction.

Preferably, the fitting comprises one or more gaskets interposed between the main body and the pipe and/or between the main body and the connecting terminal member. The gaskets are preferably of the "O-ring" type and are collocated in respective housing obtained on the outer surface of the fitting main body. The gaskets have the function to maximize the sealing of the coupling between the fitting and the pipe against leaking of the delivered fluid in the pipe itself. Particularly, the gaskets have the task of assuring the sealing outwardly the pipe, the sealing inwardly (useful if the pipe is working in polluted lands), the sealing among different layers of the pipe, and the electric insulating. In particular cases (polluted lands, etc.) the gaskets could be realized with fluorinated rubber based on silicone, or with a different material being compatible with the carried fluid.

According to the preferred embodiment of the present invention, the fitting comprises a pipe clamping ring that could be situated between the outer pipe surface and the clamping element. The pipe clamping ring is internally threaded or barbed (i.e. provided with parallel annular throats) to externally seam the pipe itself. The clamping element, for example a threaded nut, is engageable over an outer portion of the connecting terminal member. By screwing the threaded nut on the connecting terminal member already blocked by the seeger circlip on the pipe main body, a sufficient pressure to allow the barbed adaptors to enter at least partially into the outer wall of the pipe is applied to the clamping ring: the pipe is squashed against the barbed or threaded portion of the main body, or bush, situated inside thereof, causing partial or full penetration of the barbed adaptors in the inner wall of the pipe. The fitting is thereby blocked on the pipe definitively. Preferably, the arrangement of the barbed adaptors of the pipe clamping ring is such that the barbed adaptors themselves enter into the outer polyethylenic layer (or made of polyolefin) only of the multilayer without cutting it.

The fitting of the present invention is simply to realize and it might be fabricated with held down costs, because of the seeger circlip is a simple and economic element in itself. The assembly of the fitting on the multilayered pipe is simply and might be carried out by non-skilled specialist without cooperation of hydraulic press or equivalent equipment.

A considerable benefit that the fitting according to the invention has, compared with known fitting, is that once it has been arranged on the corresponding pipe, the fitting cannot be any more disassembled: whereas the nut and the pipe clamping ring may be disassembled from the fitting, the main body (or bush) and the connecting terminal member can be no more divided. In other words the snap fit realized by the seeger circlip is irreversible. From the point of view of mechanics, this characteristic makes the fitting of the invention particularly resistant having positive effects regarding to the sealing fitting itself at the high pressures of the fluid delivered in the pipe. Particularly, the fitting according to the present invention assures the sealing of the coupling to the pipe when the fluid delivered in the pipe itself has a high pressure too, for example higher than the nominal working pressure of the multilayer pipe.

Further aspects and objects of the present invention will become more evident from the description below, made for illustrative and not limitative purposes, with reference to the accompanying schematic drawings, in which:
- figure 1 is an exploded view of a fitting according to the present invention;
- figure 2 is a partial and axial section view of the fitting shown in figure 1, assembled on a pipe;
- figure 3 is plant view of a first embodiment of a fitting component shown in figure 1;
- figure 4 is a front view of the component of figure 3;
- figure 5 is perspective view of a second embodiment of a fitting component shown in figure 1;
- figure 6 is perspective view of a third embodiment of a fitting component shown in figure 1;
- figure 7 is perspective view of a fourth embodiment of a fitting component shown in figure 1.

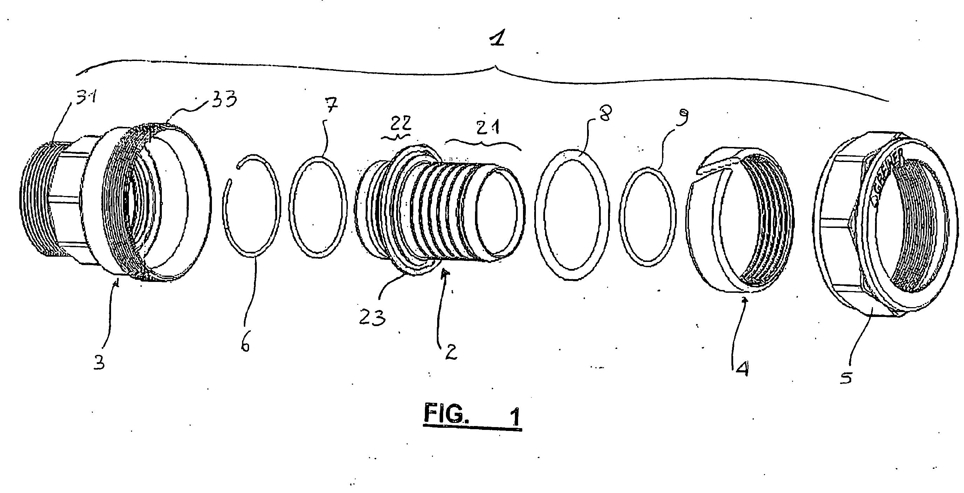

Referring to figure 1, is shown a fitting 1 according to the present invention for the pipe connection in polymeric material, or multilayered (armoured) ones, to other pipes or external loop. The fitting 1 is adapted for pipes delivering fluids or gasses, at high pressures too, for example higher than the nominal working pressure of the pipe itself.

The fitting 1 comprises a main body, or bush, 2 that is provided with a first portion 21, introducible at least partially in a free ending of a pipe, and a second portion 22 assigned to be brought in abutment configuration against the edge of the pipe ending itself. In practice, the first portion 21 and the second portion 22 of the main body 2 are separated by a wall 23 that works as a stop while introducing the portion 21 in the corresponding pipe.

The main body 2 shown in figure 1 has a generally circular section and is preferably made of metal, for example brass or brass alloy, steel, otherwise a plastic material. The outer diameter of the first portion 21 of the main body 2 is such to allow forced introduction into the corresponding pipe, i.e. the outer diameter of the first portion 21 of the fitting is more or less equal to the inner diameter of the pipe the fitting is applied to.

The first portion 21 of the main body 2, or bush, is externally threaded or provided with parallel barbed adaptors.

Furthermore the fitting 1 comprises a terminal member 3 for connecting to other pipes or external loop. The connecting terminal member 3 might be constrained to the main body 2 (vice versa too) of the fitting 1, and is provided with standard means for attachment to other fittings or loop, for example it is provided with a threaded portion 31. The connecting terminal member 3 is fittable on the second portion 22 of the main body 2 (vice versa too), that is to say it could slide over it up to a point. It is further provided for a clamping element 5, for example a nut, having the functionality of tightening the connecting terminal member on pipe.

Advantageously, the fitting 1 according to the present invention comprises at least an elastic element 6 arranged in intermediate position between the second abutting portion 22 of the main body 2 and the connecting terminal member 3, for definitive snap fit of the connecting terminal member 3 to the main body 2 of the fitting 1. Every provided elastic element 6 has the functionality of deforming to allow the sliding introduction of the connecting terminal member 3 over the second portion 22 of the body 2 and, subsequently, to "snap" caused by a spring back for blocking the terminal member 3 in a predefined position. The spring back of every element 6 is provided at least partially within a recess obtained on the inner surface of the connecting terminal member 3.

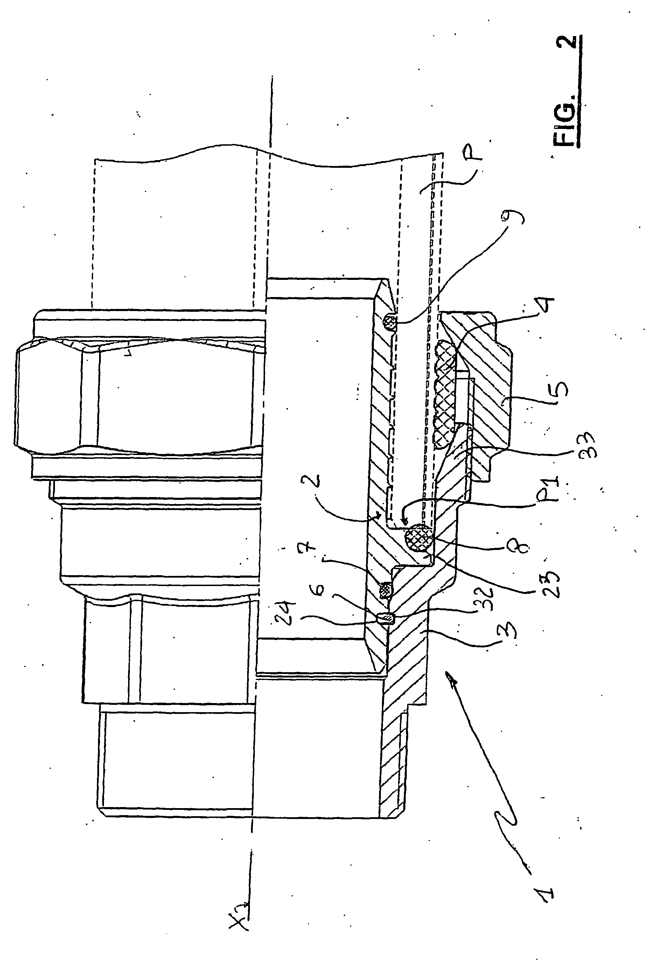

The fitting 1 further comprises a pipe clamping ring 4 cooperating with the locking element 5 to complete the coupling of the fitting to the corresponding pipe. Preferably such a ring 4 is realized in metallic or plastic material and it is elastically deformable in radial direction. More exactly, it is preferably an open ring (namely not closed) because of an "omitted" length: in fact it might have a cutting (or opening) covering, e.g., an angle of 30°, or it might be obtained with a longitudinal cutting (or parallel to X axis of figure 2), otherwise with any other shape.

Figure 2 is a partial section view, along the X axis, of the fitting 1 assembled and operative on a pipe P. The pipe P might be composed of polymeric material, for example polyethylene, but preferably it is a multilayer pipe (armoured). For example, the pipe P shown in figure 2 is a multilayer polyethylene pipe with a strengthening aluminum layer. In the embodiment shown, the fitting 1 comprises a single elastic element 6. The elastic element 6 is preferably a circlip elastically deformable in radial direction, that is a ring 6 that, under force action conditions, might be deformed in a reduced diameter configuration and returning back in its initial configuration, due to a spring back, when not anymore subjected to such a force. More preferably, the elastic element 6 is a so called "seeger" circlip, that is a ring provided with a lack (i.e. not having a length) that allows the deformation thereof to a reduced diameter configuration. The seeger circlip 6 shown in figure 1 is realized in a metallic material, for example steel, otherwise in brass.

Having a look to figure 2, it will be realized which the assembling steps of fitting 1 on the pipe P are.

Initially the pipe clamping ring 4 and the clamping element, that is the threaded nut 5, are fitted on the pipe P.

The barbed portion (that is to say provided with parallel barbed adaptors) 21 of the main body 2 of fitting 1 is introduced into the pipe P, up to lead the wall 23 to rabbet against the edge P1 of the pipe P. The outer diameter of the barbed portion 21 is such that the introduction is allowed, eventually forced, into the pipe P. In other words, the outer diameter of the barbed portion 21 corresponds more or less to the internal diameter of the pipe P. The gasket 8, preferably a rubber O-ring, being partially accommodated in an suitable housing obtained in the wall 23 of the main body 2, is pressed against the pipe edge P1, to maximize the sealing of the coupling against possible leakage of fluid from the pipe P and to avoid the fluid itself to soak into the layer pipe P, compromising integrity thereof. On the abutting portion 22 of the main body 2 is arranged the seeger circlip 6, al least partially accommodated in the annular recess 24 obtained over the outer surface of such a portion 22.

Subsequently the connecting terminal member 3 is introduced on the abutting portion 22 of the fitting body 2. The terminal member 3 and the main body 2 are concentric. As distinctly shown in figure 2, the outer diameter of the portion 22 of the fitting 1 is almost corresponding to the inner diameter of the connecting terminal member 3, such that the terminal member 3 could be "fitted" on the portion 22 by a minimum mechanical clearance.

The sliding of the connecting terminal member 3 over the main body 2 is allowed within a length in axial direction X, that is to say up to obtain the annular recess alignment 24 of the main body 2 with the main body 2 and a corresponding annular recess 32 obtained over the inner surface of the terminal member 3. When the terminal member 3 is fitted on the body 2, the seeger circlip 6 is elastically deformed to its reduced diameter configuration, being completely accommodated into the recess 24. As the recess 32 of the connecting terminal member 3 is aligned to the recess 24 of the body 2, the seeger circlip "snaps" into the recess 32 at least partially, thereby being subjected to a spring back, causing a return even if only partially to the starting diameter, and it is partially accommodated in the recess 32.

The seeger circlip 6 might be circular, bur preferably it has a slightly squashed profile, that is to say it has an oval, elliptic or horseshoe shape. When we talk about a non-circular circlip 6, it is therefore intended the medium diameter or the equivalent diameter.

Particularly, figure 2 shows the seeger circlip 6 as the spring back occurred. It might be appreciated that such a ring 6 is partially engaging the main body 2 of the fitting and partially the connecting terminal member 3 (that is to say it is partially engaging the corresponding housings obtained on such a component). In such a final configuration, the release of the terminal member 3 from the main body 2 of the fitting 1 is not allowed.

A distinctive characteristic of the fitting 1 according to the present invention is the non-reversible coupling between the connecting terminal member 3 and the main body 2. Once the seeger circlip 6 has snapped into the final blocking position (it is engaging at the same time the terminal member 3 and the body 2), the terminal member 3 cannot be released from the body 2 of the fitting 1 anymore.

The assembling of the fitting 1 over the pipe P is accomplished by coupling the clamping element 5 to the terminal member 3. For all practical purposes the clamping element 5 is a threaded nut screwable on a portion 33 of the terminal member 3 at least partially overlapping the pipe P for some length (figure 2). The pipe clamping ring 4 is interposed between the portion 33 of the terminal member 3 and the threaded nut 5 on a side, and the outer surface of the pipe P on the other side. As the nut 5 has been screwed on the terminal member 3, the pipe clamping ring 4 is clamped (pressed) against the pipe P surface. The inner surface of the pipe clamping ring 4 is preferably threaded or barbed to seam the pipe P, thereby to penetrate at least partially into the outer wall of the pipe P, which might be composed of polyethylene, polyolefin, etc. Figure 2 shows the fitting 1 assembled on the pipe P, having the nut 5 screwed on the terminal member 3 and the pipe clamping ring 4 clamped against the pipe P surface. The strain applied by the nut 5 is thereby released on the pipe P: the inner wall of the pipe P is thereby squashed against the barbed adaptors of the main body 2 such that the barbed adaptors themselves will penetrate partially or completely into the pipe P.

As shown in figures 1 and 2, preferably the fitting 1 comprises some other gaskets of O-ring type 7-9 having the function of sealing guarantee of the fitting-pipe coupling. The gaskets 7 and 9 are accommodated in corresponding circular housings on the outer surface of the main body 2. Particularly, the gasket 9 has the principle object to improve the fitting sealing in presence of possible serrations or manufacturing errors that might be present on the inner surface of the pipe P being formed while extruding the pipe P itself.

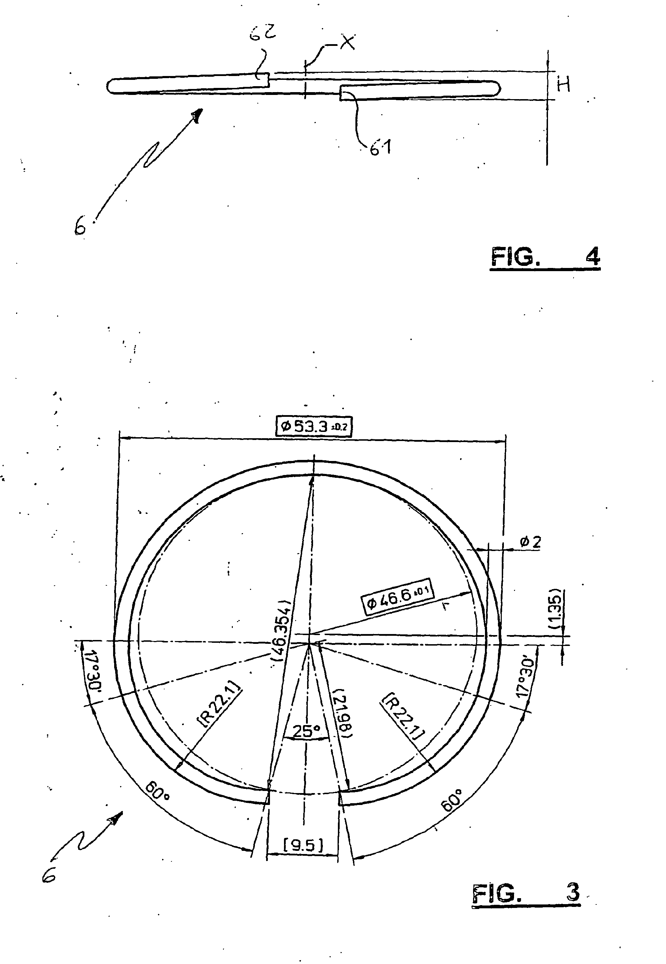

Figure 3 shows, in a planar view, a possible embodiment of the seeger circlip 6, whereas figure 4 is a lateral view of the ring itself 6. The ring 6 is obtained from a metallic wire, preferably made of brass or steel, having a preferably circular section, for example having a diameter of about 2 mm. In the example shown in figures 3 and 4, the "omitted" portion of the ring 6 covers an angle in the centre of about 25°. Observing figure 3, it might be realized how the ring 6 is partially oval-shaped and not perfectly circular shaped (the bending radii and angles are represented in the center of the various portions): the minimum diameter is about 46,6 mm and the maximum diameter is about 53,3 mm. This "oval" or horseshoe shape limits the chance that the ring 6 might come out from the annular housing 24 during the assembling of the fitting 1 on the pipe P. As clearly shown in figure 4, the seeger circlip 6 is slightly deformed in axial direction X, for example is expanded in such a direction up to height H of about 4 mm. As the circlip 6 is deformed to its reduced diameter configuration, the endings 61 and 62 (figure 4) tend to come nearer. During the subsequent spring back, the endings 61 and 62 tend to spread out to come back in the starting position, completely or partially.

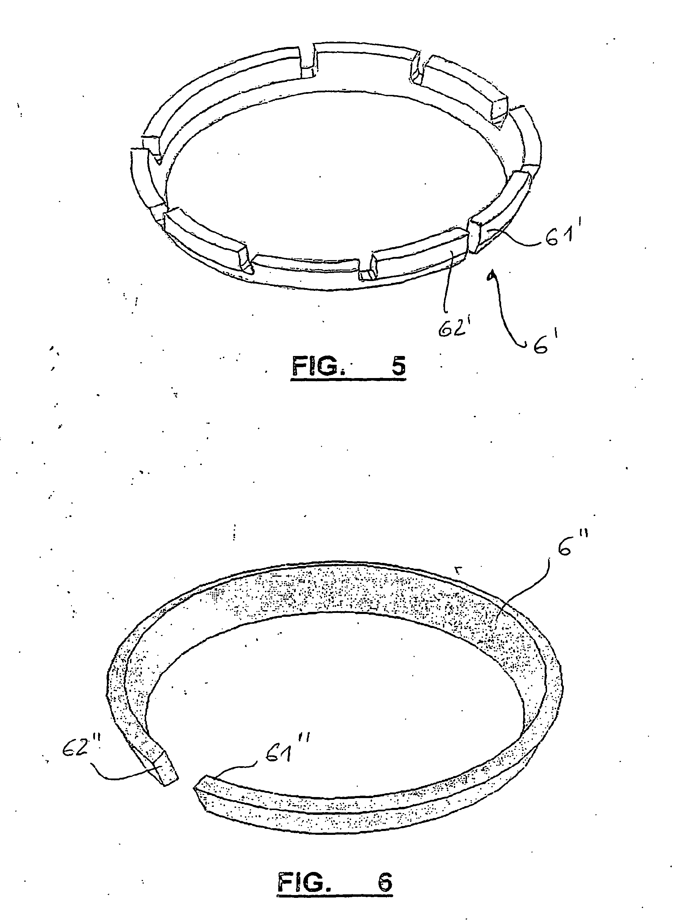

Figures 5 and 6 show, respectively, a second and third embodiment of the circlip 6' and 6" of the fitting 1 according to the present invention. In particular, the second embodiment 6' and the third embodiment 6" of the circlip have a generic tapered shape.

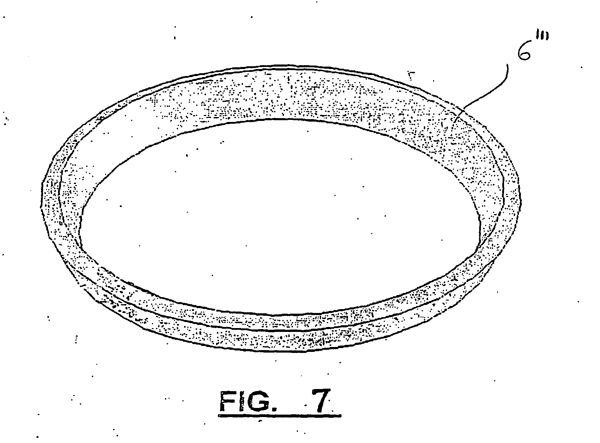

Figure 7 shows a fourth embodiment of the circlip 6"'. The ring 6''' is a closed ring, composed of an elastically deformable material in the radial direction, for example a plastic material. Preferably, the closed circlip 6''' is composed of an acetalic resin.

The fitting 1 according to the present invention is easy to assembly on pipes P composed of polymeric or multilayered (armoured) material, and it proved to be particularly effective in difficult operative conditions too, for example with fluid pressure within the pipe P higher than the nominal pipe working pressure. The non-reversible coupling between the connecting terminal member 3 and the main body 2 of the fitting, that is to say the impossibility of releasing the terminal member 3 once the seeger circlip 6 has been snapped into the corresponding housings, will maximize the coupling mechanical sealing. The O-ring gaskets 7-9 will guarantee the sealing against possible fluid leaking from the ending of the pipe P.

The assembly might be completed in a plurality of methods.

For example, a first solution for assembling comprises the steps of:
- introducing the first threaded or barbed portion 21 of the main body 2 inside an ending portion P1 of the pipe P up to bring the wall 23 to rabbet against the edge of the pipe P;
- fitting the connecting terminal member 3 onto the second abutting portion 22, or vice versa fitting the main body 2 on the connecting terminal member 3, up to make snap the "seeger" circlip 6, being accommodated in the annular recess obtained on the outer surface of the second abutting portion of the main body 2, into the corresponding annular recess 32 of the connecting terminal member 3 itself.

The assembly becomes ultimate by the following steps:
- positioning the threaded element, that is to say the nut 5, on pipe;
- positioning the pipe clamping ring 4 outside of the pipe P, in an intermediate position between the pipe P itself and the threaded nut 5;
- screwing the threaded nut 5 onto the threaded portion 33 of the connecting terminal member 3 for seaming the pipe clamping ring 4 to the outer surface of the pipe P. The inner wall of the pipe is so squashed against the barbed portion 21 of the main body 2 thereby blocking, definitively, the fitting over the pipe.

A second solution for assembling the fitting provides the steps of:
- fitting the portion 22 of the main body 2 on the connecting terminal member 3 up to make the seeger circlip 6 snap into the corresponding annular recess 32 of the connecting terminal member 3 itself (thereby it is carried out an irreversible snap fit between the connecting terminal member 3 and the barbed bush 2 of the fitting);
- positioning the threaded element 5 on pipe P;
- positioning the pipe clamping ring 4 outside of the pipe P in an intermediate position between the pipe P itself and the threaded nut;
- fitting the ending portion P1 of the pipe P on the barbed portion 21 of the main body 2 up to bring it to rabbet against the edge 23;
- screwing the nut 5 onto the threaded portion 33 of the connecting terminal member 3 for seaming said the pipe clamping ring 4 to the outer surface of the pipe P. The inner wall of the pipe is so squashed against the barbed portion 21 of the main body 2 thereby blocking, definitively, the fitting over the pipe.

A relevant advantage compared to the traditional solutions is that, apart from being economic, the fitting 1 might be arranged on pipes P by non-experienced personnel too and without hydraulic press cooperation, having obvious advantages concerning of costs and installation times.

## Claims

1. Fitting (1) for a pipe (P) composed of a polymeric or multilayer material (armoured), comprising a main body (2), or bush, having a first portion (21) externally barbed or threaded, at least partially introducible in an ending (P1) of said pipe (P), and a second abutting portion (22), intended to protrude outwardly from said pipe ending (P1), a connecting terminal member (3) fittable on said second abutting portion (22) for connecting to other pipe or external loop, **characterized by** comprising an element (5) coupled to said connecting terminal member (3) for clamping said connecting terminal member (3) on said pipe (P) and said main body (2), and by comprising at least one elastic element (6) situated between said second abutting portion (22) and said connecting terminal (3) for permanent snap fit of the connecting terminal member (3) to the main body (2) of the fitting (1).

2. Fitting according to claim 1, **characterized in that** said main body (2) and said connecting terminal member (3) are basically cylindrical and said elastic element (6) is a "seeger" circlip.

3. Fitting according to claim 2, **characterized in that** said "seeger" circlip (6) is composed of brass or steel.

4. Fitting according to claim 2 or claim 3, **characterized in that** said "seeger" circlip (6) has a circular section.

5. Fitting according to one of the claims 2-4, **characterized in that** said "seeger" circlip (6) is at least partially accommodated in an annular recess (24) obtained on the outer surface of the second abutting portion (22) of the fitting main body (2) and, when functional, is engaging at least part of an annular recess (32) obtained on the inner surface of said connecting terminal member (3).

6. Fitting according to claim 5, **characterized in that** said "seeger" circlip (6) is elastically deformable in radial direction to allow the connecting terminal member (3) to slide over the outer surface of the abutting portion (22) of the main body (2) up to final alignment of said annular recess (32) of the connecting terminal member (3) with said annular recess (24) of the main body (2).

7. Fitting according to claim 6, **characterized in that**, while the connecting terminal member (3) is sliding over the abutting portion (22) of the main body (2), said "seeger' circlip (6) has a first reduced diameter configuration and, while said annular recess (32) of the connecting terminal member (3) is aligned with said annular recess (24) of the main body (2), said "seeger" circlip (6) gets into a second maximum or intermediate diameter configuration, realizing the snap fit between said main body (2) and said connecting terminal member (3).

8. Fitting according to claim 7, **characterized in that** in the second configuration said at least one portion of said "seeger" circlip (6) engages at least part of said annular recess (32) of the connecting terminal member (3), preventing the connecting terminal member (3) itself to release said abutting portion (22) of the main body (2).

9. Fitting according to anyone of the preceding claims 2 - 8, **characterized in that** said "seeger" circlip is an open ring, having a "horseshoe", oval or elliptical shape.

10. Fitting according to anyone of the preceding claims 2 - 8, **characterized in that** said "seeger" circlip is a closed ring, composed of a radially elastically deformable material.

11. Fitting according to anyone of the preceding claims 1 - - 10, **characterized by** comprising one or more gasket (7 - 9) interposed between said main body (2) and the corresponding pipe (P) and/or between said main body (2) and said connecting terminal member (3).

12. Fitting according to claim 11, **characterized in that** said gaskets (7 - 9) are "O-ring" being accommodated in corresponding grooves obtained on the outer surface of the fitting main body (2).

13. Fitting according to anyone of the preceding claims 1 - 12. **characterized by** comprising a pipe clamping ring (4) that might be located between the outer surface of sold pipe (P) and said clamping element, or nut, (5) for externally seaming the pipe (P) itself.

14. Fitting according to claim 13, **characterized in that** said pipe clamping ring (4) is elastically deformable in radial direction and is realized in plastic or metallic material.

15. Fitting according to claim 13 or claim 14, **characterized in that** said pipe clamping ring (4) is provide with barbed adaptors or inner parallel throats at the inner surface thereof otherwise with threads to allow grasping on pipe (P) without cutting it.

16. Fitting according to anyone of the preceding claims, **characterized in that** said clamping element (5) is a threaded nut engageable on a threaded portion (33) of said connecting terminal member (3).

## Patentansprüche

1. Fitting (1) für ein Rohr (P), welcher aus einem polymeren oder Mehrschichtmaterial (armiert) zusammengesetzt ist, umfassend einen Grundkörper (2), oder eine Buchse, mit einem ersten Teil (21), welches außen mit Widerhaken oder Gewinde versehen ist und wenigstens teilweise in eine Endung (P1) des Rohres (P) einsetzbar ist, und ein zweites Anschlagteil (22), welches dazu bestimmt ist, von dem Rohrende (P1) nach außen vorzustehen, ein Verbindungsanschlusselement (3), welches auf das zweite Anschlagteil (22) zwecks Verbindung mit einem anderen Rohr oder einem äußeren Kreislauf aufsetzbar ist, **dadurch gekennzeichnet, dass** der Fitting ein Element (5) umfasst, dass mit dem Verbindungsanschlussteil (3) verbunden ist, um das Verbindungsanschlussteil (3) auf das Rohr (P) und den Grundkörper (2) zu klemmen und **dadurch**, dass der Fitting wenigstens ein elastisches Element (6) umfasst, das zwischen dem zweiten Anschlagteil (22) und dem Verbindungsanschluss (3) angeordnet ist, um eine dauerhafte Schnappverbindung des Verbindungsanschlussteils (3) auf dem Grundkörper (2) des Fittings (1) zu bewerkstelligen.

2. Fitting nach Anspruch 1, **dadurch gekennzeichnet, dass** der Grundkörper (2) und das Verbindungsanschlussteil (3) im Wesentlichen zylindrisch ausgestaltet sind und dass das elastische Element (6) als Seegerring ausgebildet ist.

3. Fitting nach Anspruch 2, **dadurch gekennzeichnet, dass** der Seegerring (6) aus Messing oder Stahl zusammengesetzt ist.

4. Fitting nach einem der Ansprüche 2 oder 3, **dadurch gekennzeichnet, dass** der Seegerring (6) einen ringförmigen Abschnitt aufweist.

5. Fitting nach einem der Ansprüche 2 bis 4, **dadurch gekennzeichnet, dass** der Seegerring (6) wenigstens teilweise in einer ringförmigen Ausnehmung (24) in der Außenfläche des zweiten Anschlagteils (22) des Fittinggrundkörpers (2) angeordnet ist und im Betrieb wenigstens in einen Teil einer ringförmigen Ausnehmung (32) in der inneren Fläche des Verbindungsanschlussteils (3) eingreift.

6. Fitting nach Anspruch 5, **dadurch gekennzeichnet, dass** der Seegerring (6) in radialer Richtung elastisch deformierbar ist, um zu gewährleisten, dass das Verbindungsanschlussteil (3) über die äußere Oberfläche des Anschlagteils (22) des Grundkörpers (2) gleiten kann, bis schließlich die ringförmige Ausnehmung (32) des Verbindungsanschlussteils (3) mit der ringförmigen Ausnehmung (24) des Grundkörpers (2) fluchtet.

7. Fitting nach Anspruch 6, **dadurch gekennzeichnet, dass** der Seegerring (6) bei der Gleitbewegung des Verbindungsanschlussteils (3) über das Anschlagteil (22) des Grundkörpers (2) eine erste Konfiguration verringerten Durchmessers einnimmt und wenn die ringförmige Ausnehmung (32) des Verbindungsanschlussteils (3) mit der ringförmigen Ausnehmung (24) des Grundkörpers (2) fluchtet, der Seegerring (6) eine zweite Konfiguration eines größten Durchmessers oder eines Zwischendurchmessers einnimmt und dabei die Schnappverbindung zwischen dem Grundkörper und dem Verbindungsanschlussteil (3) herstellt.

8. Fitting nach Anspruch 7, **dadurch gekennzeichnet, dass** in der zweiten Konfiguration das wenigstens eine Teil des Seegerrings (6) in wenigstens ein Teil der ringförmigen Ausnehmung (32) des Verbindungsanschlussteils (3) eingreift und das Verbindungsanschlussteils (3) daran hindert, mit dem Anschlagteil (22) des Grundkörpers (2) außer Eingriff zu gelangen.

9. Fitting nach einem der Ansprüche 2 bis 8, **dadurch gekennzeichnet, dass** der Seegerring ein offener Ring mit einer Hufeisenkontur, einer ovalen oder einer elliptischen Kontur ist.

10. Fitting nach einem der Ansprüche 2 bis 8, **dadurch gekennzeichnet, dass** der Seegerring als geschlossener Ring ausgebildet ist, der aus einem radial elastisch deformierbaren Material zusammengesetzt ist.

11. Fitting nach einem der Ansprüche 1 bis 10, **dadurch gekennzeichnet, dass** dieser eine oder mehrere Dichtungen (7 bis 9) umfasst, die zwischen dem Grundkörper (2) und dem korrespondierenden Rohr (P) und/oder zwischen dem Grundkörper (2) und dem Verbindungsanschlusselement (3) angeordnet sind.

12. Fitting nach Anspruch 11, **dadurch gekennzeichnet, dass** die Dichtungen (7 bis 9) als O-Ringe ausgebildet sind, die in entsprechenden Nuten in der äußeren Fläche des Fittinggrundkörpers (2) angeordnet sind.

13. Fitting nach einem der vorhergehenden Ansprüche 1 bis 12, **dadurch gekennzeichnet, dass** dieser einen Rohrklemmring (4) umfasst, der zwischen der äußeren Fläche des Rohres (P) und dem Klemmelement oder einer Nut (5) zur äußeren Säumung des Rohres (P) angeordnet sein könnte.

14. Fitting nach Anspruch 13, **dadurch gekennzeichnet, dass** der Rohrklemmring (4) radial elastisch deformierbar ist und aus Kunststoff oder aus einem metallenen Material ausgeführt ist.

15. Fitting nach Anspruch 13 oder 14, **dadurch gekennzeichnet, dass** der Rohrklemmring (4) mit Widerhakenadapter oder inneren parallelen Kehlen an der inneren Oberfläche desselben oder mit Gewinde versehen ist, um ein Greifen des Rohres (P), ohne dasselbe zu Schneiden, zu ermöglichen.

16. Fitting nach einem der vorhergehenden Ansprüche, **dadurch gekennzeichnet, dass** das Klemmelement (5) als Gewindemutter ausgebildet ist, die mit einem Gewindeteil (33) des Verbindungsanschlussteils (3) in Eingriff bringbar ist.

## Revendications

1. Raccord (1) pour un tuyau (P) composé d'un matériau polymère ou multicouche (blindé), comprenant un corps principal (2) ou bague, ayant une première partie (21) barbelée ou filetée extérieurement, pouvant être au moins introduite dans une extrémité (P1) dudit tuyau (P) et une seconde partie de butée (22), destinée à saillir vers l'extérieur depuis ladite extrémité de tuyau (P1), un élément terminal de connexion (3) pouvant être raccordé sur ladite seconde partie de butée (22), afin de permettre la connexion à un autre tuyau ou à une boucle externe, **caractérisé en ce qu'**il comprend un élément (5) raccordé audit élément terminal de connexion (3) pour fixer ledit élément terminal de connexion (3) sur ledit tuyau (P) et ledit corps principal (2) et **en ce qu'**il comprend au moins un élément élastique (6) situé entre ladite seconde partie de butée (22) et ledit terminal de connexion (3) pour une insertion permanente de l'élément terminal de connexion (3) dans le corps principal (2) du raccord (1).

2. Raccord selon la revendication 1, **caractérisé en ce que** ledit corps principal (2) et ledit élément terminal de connexion (3) sont essentiellement cylindriques et ledit élément élastique (6) est un circlip « Seeger ».

3. Raccord selon la revendication 2, **caractérisé en ce que** ledit circlip « Seeger » (6) est composé de laiton ou d'acier.

4. Raccord selon la revendication 2 ou 3, **caractérisé en ce que** ledit circlip « Seeger » (6) a une section circulaire.

5. Raccord selon l'une des revendications 2 à 4, **caractérisé en ce que** ledit circlip « Seeger » (6) est au moins partiellement abrité dans une cavité annulaire (24) ménagée sur la surface extérieure de la seconde partie de butée (22) du corps principal de raccord (2) et, quand il est fonctionnel, met en prise au moins une partie d'une cavité annulaire (32) ménagée sur la surface interne dudit élément terminal de connexion (3).

6. Raccord selon la revendication 5, **caractérisé en ce que** ledit circlip « Seeger » (6) est élastiquement déformable dans une direction radiale, afin de permettre à l'élément terminal de connexion (3) de coulisser sur la surface extérieure de la partie de butée (22) du corps principal (2) jusqu'à l'alignement final de ladite cavité annulaire (32) de l'élément terminal de connexion (3) avec ladite cavité annulaire (24) du corps principal (2).

7. Raccord selon la revendication 6, **caractérisé en ce que**, pendant que l'élément terminal de connexion (3) coulisse sur la partie de butée (22) du corps principal (2), ledit circlip « Seeger » (6) a une première configuration à diamètre réduit et, pendant que ladite cavité annulaire (32) de l'élément terminal de connexion (3) est alignée avec ladite cavité annulaire (24) du corps principal (2), ledit circlip « Seeger » (6) atteint une seconde configuration de diamètre maximum ou intermédiaire, en réalisant un ajustement serré entre ledit corps principal (2) et ledit élément terminal de connexion (3).

8. Raccord selon la revendication 7, **caractérisé en ce que**, dans la seconde configuration, ladite au moins une partie dudit circlip « Seeger » (6) met en prise au moins une partie de ladite cavité annulaire (32) de l'élément terminal de connexion (3), en empêchant que l'élément terminal de connexion (3) lui-même ne relâche ladite partie de butée (22) du corps principal (2).

9. Raccord selon l'une quelconque des revendications 2 à 8 précédentes, **caractérisé en ce que** ledit circlip « Seeger » est un anneau ouvert, ayant une forme de fer à cheval, ovale ou elliptique.

10. Raccord selon l'une quelconque es revendications 2 à 8 précédentes, **caractérisé en ce que** ledit circlip « Seeger » est un anneau fermé, composé d'un matériau radialement élastiquement déformable.

11. Raccord selon l'une quelconque des revendications 1 à 10 précédentes, **caractérisé en ce qu'**il comprend un ou plusieurs joints (7 à 9) interposés entre ledit corps principal (2) et le tuyau correspondant (P) et/ou entre ledit corps principal (2) et ledit élément terminal de connexion (3).

12. Raccord selon la revendication 11, **caractérisé en ce que** lesdits joints (7 à 9) sont des « joints toriques » abrités dans des cannelures correspondantes ménagées sur la surface extérieure du corps principal du raccord (2).

13. Raccord selon l'une quelconque des revendications 1 à 12 précédentes, **caractérisé en ce qu'**il comprend un anneau de serrage de tuyau (4) qui pourrait être situé entre la surface extérieure dudit tuyau (P) et ledit élément de serrage, ou écrou (5) pour fixer extérieurement le tuyau (P) lui-même.

14. Raccord selon la revendication 13, **caractérisé en ce que** ledit anneau de serrage de tuyau (4) est élastiquement déformable dans une direction radiale et est réalisé en un matériau plastique ou métallique.

15. Raccord selon la revendication 13 ou 14, **caractérisé en ce que** ledit anneau de serrage de tuyau (4) est doté d'adaptateurs barbelés ou de gorges parallèles internes sur sa surface interne, ou autrement de filets permettant la prise sur le tuyau (P) sans le couper.

16. Raccord selon l'une quelconque des revendications précédentes, **caractérisé en ce que** ledit élément de serrage (5) est un écrou fileté pouvant être mis en prise sur une partie filetée (33) dudit élément terminal de connexion (3).
